# EUROPEAN PATENT APPLICATION

(11) **EP 2 685 638 A1**
(43) Date of publication of application: **15.01.2014**
(21) Application number: 13157664.7
(22) Date of filing: 04.03.2013
(51) Int. Cl.: H04B 7/06, H04B 7/08, H04M 1/02, H04M 1/725, H04W 88/02, H04B 1/38

(54) **Auxiliary antenna array attachment for wireless devices**

(30) Priority: 09.03.2012 US 201213416781
(71) Applicant: BlackBerry Limited, Waterloo, ON N2K 0A7 (CA)
(72) Inventor: Periyalwar, Shalini Suresh, Kanata, Ontario K2K 3K1 (CA); Ayatollahi, Mina, Waterloo, Ontario N2L 3W8 (CA); Wilson, Kelce, Irving, TX Texas 75039 (US)
(74) Representative: Hibbert, Juliet Jane Grace

(57) **Abstract**

A wireless communication device is provided. The device comprises a radio access subsystem disposed at least partially within a housing of the device. The device further comprises at least one internal antenna disposed within the housing of the device. The at least one internal antenna is communicatively coupled to the radio access subsystem. The device further comprises an external communication port disposed on the housing of the device. The external communication port is communicatively coupled to the radio access subsystem. The device further comprises a control component configured to determine whether an external antenna module is connected to the external communication port and to control the radio access subsystem to selectively use the internal antenna and the external antenna module. Selective use comprises using only the internal antenna, or using only the external antenna module, or using both the internal antenna and the external module simultaneously.

## Description

### BACKGROUND

Radio access technologies (RATs) that may be used in wireless telecommunications may include, among others, Global System for Mobile Communications (GSM), General Packet Radio Service (GPRS), Universal Mobile Telecommunications System (UMTS), Universal Terrestrial Radio Access Network (UTRAN), Long Term Evolution (LTE), Code Division Multiple Access (CDMA), WiMAX, and WiFi. One or more RATs may operate concurrently in a single wireless device to support a demand for concurrent use of multiple applications or services. Each RAT may use a different size and shape of antenna depending on, among other factors, the frequency band used by the RAT. The internal placement of the antennas in a device may be driven by the required mechanical features of the device, consumer styling preferences, and/or other factors.

As used herein, the terms "device" or "wireless device" may refer to portable devices such as mobile telephones, personal digital assistants, handheld computers, laptop computers, tablet computers, or similar devices, but may also refer to devices that are not transportable, such as desktop computers, set-top boxes, network appliances, or similar devices capable of wireless telecommunication.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figures 1a and 1b illustrate wireless devices with auxiliary antenna arrays, according to an implementation of the disclosure.

Figure 2 is a block diagram illustrating an antenna configuration controller and associated components, according to an implementation of the disclosure.

Figure 3 is a flowchart for a method for selecting an antenna, according to an implementation of the disclosure.

Figure 4 illustrates a wireless device suitable for implementing the several aspects of the present disclosure.

### DETAILED DESCRIPTION

It should be understood at the outset that although illustrative implementations of one or more aspects of the present disclosure are provided below, the disclosed systems and/or methods may be implemented using any number of techniques, whether currently known or developed in the future. The disclosure should in no way be limited to the illustrative implementations, drawings, and techniques illustrated below, including the example designs and implementations illustrated and described herein, but may be modified within the scope of the appended claims along with their full scope of equivalents.

The antennas in wireless devices that are equipped with multiple antennas typically operate below their potential due to their placement in close proximity to one another in the small internal spaces within the devices. The radio systems that may be used in future cellular and other wireless systems introduce additional highly challenging performance demands on antenna configuration. These challenges may apply to LTE systems and their advanced features such as carrier aggregation, as well as to other radio systems, such as WiMAX, white space access, and WiFi, which may be simultaneously operable on a device for different services.

More specifically, a device with multiple antennas typically has antennas that are fixed inside the device and have fixed gain. In some situations, due to the propagation environment, the location of the device, and/or the position of the built-in antennas, significant multipath scattering and fading may occur, which may result in poor coverage, a poor or lost connection, and/or reduced data transfer speeds.

Future wireless applications such as 3D video and augmented reality may be bandwidth intensive. Further, wireless devices may be used as clients as well as access points or cluster heads in future deployment scenarios. Wireless devices may also be engaged in peer-to-peer communications. All of these applications and usage scenarios may demand more flexibility in the antennas deployed in the device. Each of the device usage scenarios given above may require a different antenna configuration for optimal gain and directivity. For example, the antenna arrangement to maximize gain in the case of peer-to-peer communication may differ from the arrangement required for a device acting as a client in a macro-cell scenario. Further, the number of multiple wireless connections in simultaneous use may increase in the future, possibly placing additional demands on antenna configurations.

A wireless telecommunication device that has at least two antennas may operate in one of several modes, when using both antennas simultaneously. The set of possible modes includes channel diversity, dual simplex, multiple input multiple output (MIMO), beam forming, and independent operation of different radio access technology (RAT) channels. For channel diversity, a radio subsystem controller may monitor the received signal power levels, for a commonly-received signal, on multiple antennas. Some channel diversity systems may select the channel having the higher estimated signal to noise ratio (SNR) for demodulation. Other systems may independently demodulate multiple signals that are received on multiple different antennas, and select the data stream having the lowest bit error rate (BER) for forwarding. In some situations, one particular antenna may pick up measurably stronger signal power, but due to multipath interference (i.e., multiple time-delayed copies of the same signal arriving at the same antenna) or some other factor, the symbol determination for the higher power signal will have a higher error rate than the symbol determination for a signal having a lower power rate. For RATs that use different channels for transmit and receive, some wireless systems cannot measure transmit channel performance, but instead must estimate the performance, using measured receive channel performance as an input to an estimation process.

For dual simplex systems, one antenna (or set of antennas) is used for only transmit while another antenna (or set of antennas) is used for only receive. In contrast, a duplex system uses an antenna for both transmit and receive. One advantage of a duplex system is that a single antenna can perform multiple tasks, whereas an advantage for a dual simplex system is that the active receiver circuitry is isolated from the transmitter's power amplifier. Such isolation enables the receiver to operate with higher sensitivity, because if stray noise power from a transmitter power amplifier bleeds into a receiver and is amplified too much, the receiver performance can be degraded. Thus, it may be preferable, in some situations, to operate even multiple duplex-capable antennas in a dual simplex mode.

In MIMO systems, it is important to maintain channel timing stability with a precision that is on the order of the symbol duration. This can be accomplished by ensuring that one channel's clock rate tracks the other channel's clock rate with some degree of tolerance. However, when using multiple antennas for beam forming, essentially using the different antennas as elements of an antenna array, the multiple antennas must be driven with carefully-controlled phase coherence at the operating radio frequency (RF). Because RF rates are typically orders of magnitude above channel symbol rates, maintaining the necessary phase relationship imposes significantly more stringent timing stability requirements.

Any relative physical movement of the antennas can severely damage the phase relationship of received and transmitted signals. This is because common beam forming techniques assume a rigid multi-antenna structure. Additionally, because significant interchannel phase variations (resulting from changing differences in time-of-arrival) could introduce jitter in the demodulated signal, it is important for a multi-antenna system to have sufficient physical rigidity in the locations of the antennas. The tolerances on the rigidity should prevent antenna phase center variation by a significant fraction (perhaps one-eighth) of the smallest operating RF wavelength. For MIMO, the rigidity requirements could be driven by a lower quantity: the highest detector bit rate, rather than the RF.

The mode of independent RAT operation for different antennas includes situations in which one antenna may be used for GPS, but not cellular communications or Bluetooth, while a different antenna is used for cellular communications. If a system has as many different antennas as embedded RATs, the system can assign each RAT to its own antenna. In some situations, though, better performance may actually be achieved by foregoing independent operation and permitting the controller to assign multiple RATs to a common antenna or set of antennas.

It should be noted that multiple ones of the aforementioned modes can be used concurrently. For example, a wireless system could be monitoring two antennas in a diversity scheme, for both receive channel quality and transmit channel quality. Rather than making the diversity channel selections independently, which permits the scenario in which a single antenna is used for both transmit and receive, the radio subsystem controller could be configured to preclude an antenna from transmitting, upon that antenna being selected for receiving. A system operating in this way is using diversity concurrently with enforcing a dual simplex mode. The independent RAT mode is similar: if a particular antenna is selected for a RAT, based on diversity channel quality estimation or measurement for one RAT, the controller may then force a different RAT onto a different antenna.

As another example, if a wireless system has a total of three or more antennas, two or more of the antennas can be used in a beam forming mode for a first MIMO channel, while the other antenna operates (alone, or in combination with a fourth antenna) on the second MIMO channel. Beam forming can also similarly be used with the other multi-channel schemes of diversity and independent operation.

Higher order (> 2x2) MIMO transmissions at the device may be important in the future, especially because of the limited availability of spectrum and the increasing demand on the spectrum to support the growing wireless market and high-rate applications such as real-time video. At the same time, some devices are becoming more compact in size. Useable volume within a device for locating the MIMO antennas needed for multi-band multi-RAT operation may be highly constrained and may not be readily available in some device form factors. In addition, poor isolation between internal antennas may significantly degrade wireless channel reliability and capacity, harming the quality of the user experience and possibly reducing battery life.

Embodiments of the present disclosure address the performance challenges associated with the antennas in devices that have multiple antennas. More specifically, the embodiments provide a cost-effective, practical external antenna array supported by an antenna control software module in the device. A reliable and strong wireless connection to access points is thus provided to provide high-rate connectivity to the device.

More specifically, to overcome the issues discussed above and to prepare for the challenges of supporting future scenarios, embodiments of the present disclosure provide a removable auxiliary antenna array that may be coupled with an antenna configuration software module that may adaptively select and optimize the use of internal and external antennas. The auxiliary array may be used alone or in conjunction with the internal antennas for beam forming, MIMO or diversity to improve device performance. Hereinafter, the auxiliary antenna array may alternatively be referred to as an external antenna array, an external array, an antenna array, an array, or an external antenna module. An antenna on an external antenna array may be referred to as an external antenna.

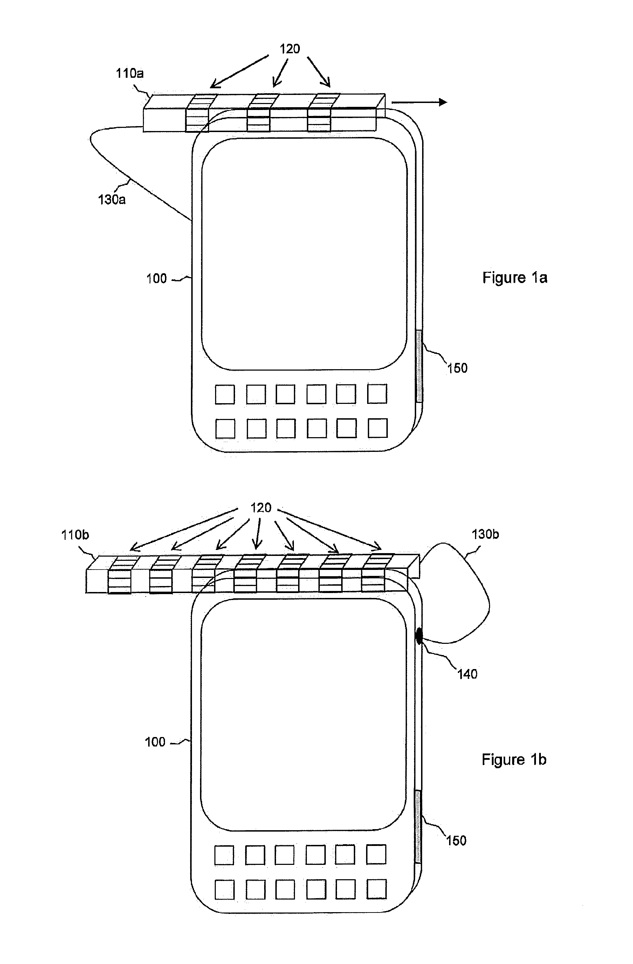

The external antenna array may be mounted on a rigid slideable or snap-on frame as shown in Figures 1a and 1b. In both figures, a device 100 is illustrated with an auxiliary antenna array 110 attached. In Figure 1a, the auxiliary antenna array 110a is shown being slid on to the top of the device 100 in a left-to-right direction from the perspective of a user looking at the front of the device 100. In this example, the auxiliary antenna array 110a has approximately the same length as the width of the device 100. Three antennas 120 are present on the auxiliary antenna array 110a in this example, but in other cases other numbers of antennas could be present. A conducting cable 130a electrically couples the auxiliary antenna array 110a to the device 100 via a communication port (not shown) on the side of the device 100. In other embodiments, the communication port may be in another position on the device 100.

Figure 1b illustrates another auxiliary antenna array 110b. In this example, seven antennas 120 are present on the auxiliary antenna array 110b, but in other cases other numbers of antennas could be present. The length of the auxiliary antenna array 110b is greater than the width of the device 100, and the auxiliary antenna array 110b thus extends beyond the form factor of the device 100. In other use cases, the auxiliary antenna array 110b might be placed on a longer edge of the device 100 so that the auxiliary antenna array 110b does not extend beyond the edges of the device 100. A conducting cable 130b electrically couples the auxiliary antenna array 110b to the device 100 via an external communication port 140. The communication port 140 may be a USB port or some other type of currently known or future connection point and may be located on the device 100 in a position different from that shown. In both Figure 1a and Figure 1b, one or more internal antennas 150 may be present in the device 100.

The frame form factor of the auxiliary antenna array has two sides that are flexible or pliable so that the sides firmly fit or adjustably slide on to a typical device form factor. The antenna array may be connected to one or more suitable existing communication ports, such as a USB port, or to a dedicated antenna port that may be made available anywhere on a future device. Alternatively, future devices may have a communication port configured such that part of the housing of the external antenna array has a snap button type connection into the port. In another embodiment, the external antenna array form factor comprises a clip-on unit of any suitable shape to accommodate a plurality of antennas. Since there is flexibility in attaching the external antenna array to any side edge of the device, if the internal antennas do not work well in proximity to each other in a particular frequency band, due to high coupling for example, the external antenna array can be used with one or more of the internal antennas to provide an appropriate antenna configuration for that band.

The external antenna array may be equipped with processing capability to dynamically change the gain and directivity of the array based on channel information and near and far field environmental effects. Such adjustments may be achieved using smart antenna technologies for designing the array, including adaptive antenna array technology in which the radiation characteristic is changed in real time in response to variations in channel noise and interference to improve the SNR. The circuitry for array operation may be located on the external frame and may be integrated with the antenna array to form a module to further save space.

With the embodiments disclosed herein, isolation may be lower between the external and internal antennas than between each of multiple internal antennas (if more than one is used) or between each of the antennas in the external array. Additionally, existing techniques for improving the isolation between the internal antennas and the external array may be used if there is a need for further isolation mitigation. Also, antenna configurations may be constructed based on isolation constraints for a given set of transmissions, as will be explained below.

The array may be attached on any of the sides of the device for optimal performance. The mutual coupling between the external antennas and the internal antennas may be considered when determining the performance of the external array. In one embodiment, the device displays a message indicating that the antenna array's position may need to be changed, estimates the isolation and/or other antenna-related characteristics, stores a set of position and measurement data, selects a preferred position for the external antenna array, and displays information informing the user where to place the antenna array.

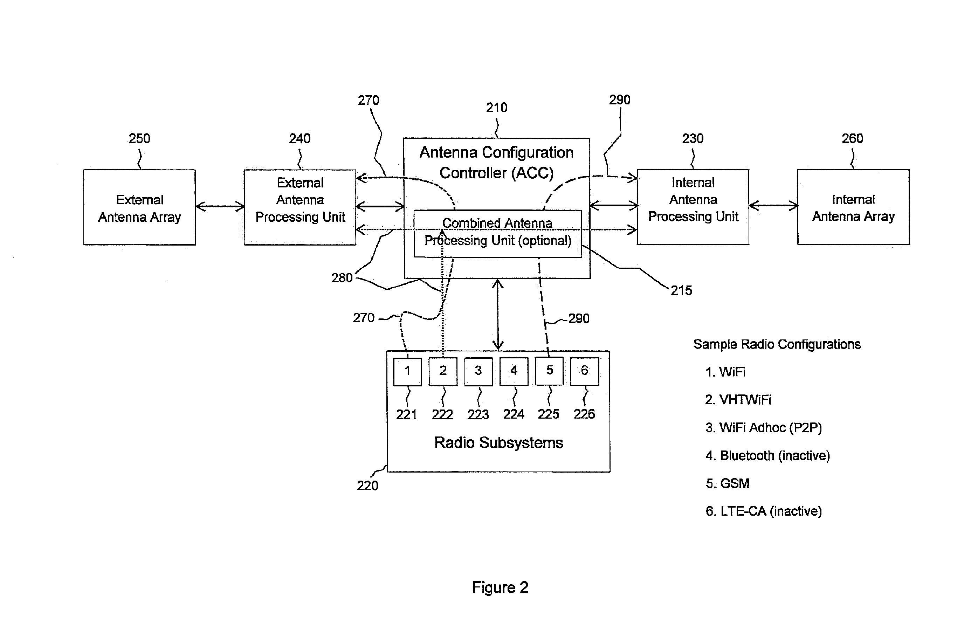

In an embodiment, a downloadable software module that can be referred to as the Antenna Configuration Controller (ACC) may be located in the device and may coordinate the functions of the auxiliary antenna array with the functions of the internal antennas. An embodiment of an ACC software module is shown in Figure 2. The ACC module 210 may be linked to the radio access subsystems 220 in the device and to both an internal antenna processing unit 230 and an external antenna processing unit 240. The radio subsystems 220 may be disposed at least partially within a housing of a device, such as the device 100 of Figures 1a and 1b. The radio subsystems 220 may be communicatively coupled to one or more internal antennas 260, which may be disposed within the housing of the device. The radio subsystems 220 may also be communicatively coupled to an external communication port disposed on the housing of the device, such as the external communication port 140 of Figure 1b.

The ACC 210 may be activated when an external antenna array 250 is detected. The signal processing for the external antenna array 250 may be performed in the external Antenna Processing Unit (APU) 240, which may be integrated with the external frame of the external antenna array 250.

Once the ACC 210 is activated, the external APU 240 may be driven by commands received from the ACC 210. The ACC 210 may selectively port the processing for antenna selection to the external APU 240 and bypass the existing internal APU 230 for those transmissions that are leveraging only the external antenna array 250. When only the internal antenna array 260 or only the external antenna array 250 is chosen for use, the ACC 210 is not involved in any further processing. When both the internal antenna array 260 and the external antenna array 250 are used, the ACC 210 treats the combination as a virtual antenna array and enables cooperation between the external APU 240 and the internal APU 230 for exchange of channel coefficients. This combination may be equivalent to the virtual antenna array formed between two terminals resulting in the case of unequal channel coefficients.

Optionally, the ACC 210 may have the added capability to perform the combined antenna processing when both the internal antenna array 260 and the external antenna array 250 are used. In this case, the external APU 240 and the internal APU 230 are bypassed.

The ACC 210 may interact with the radio subsystems 220 in the wireless device by obtaining the channel state information (CSI), channel coefficients, and/or other suitable parameters, such as transmitted or received power, measured by each of the radios in the device. The ACC 210 directs the measured data to the appropriate antenna processing unit. Based on the channel conditions, the external antenna array 250 may cooperate with any or all of the built-in antennas 260 of the device. This cooperation may be achieved by a Combined Antenna Processing Unit 215 in the ACC 210. That is, the Combined Antenna Processing Unit 215 may treat the combination of the internal antenna array 260 and the external antenna array 250 as a virtual antenna array and may adjust the characteristics of the virtual antenna array based on signal quality information received from the external APU 240, from a processing unit on the device, and/or from the radio subsystems 220. The characteristics of the virtual antenna that may be adjusted may include which antennas are selected for the virtual array and/or the amplitude and phase of the feed for each of the selected antennas.

The ACC 210 may pre-determine the isolation between the antennas of the multiple radio access technologies in simultaneous use and for different placements of the external array 250 on the device side edges. The ACC 210 may also pre-determine the respective carrier frequencies of operation and build a framework of antenna use cases that provide the required isolation. The ACC 210 may then appropriately select the antenna configurations with maximum isolation that are best suited for the specified transmissions and the placement of the array 250 with respect to the device.

The ACC may utilize any of three options for antenna selection based on the performance of the antennas: only the external antenna array, only the internal antenna array, or a combination of the internal and external arrays. It should be understood that terms such as "using the external antenna array" or "using the external antenna" may refer to using any one or more of the external antennas on the external antenna array.

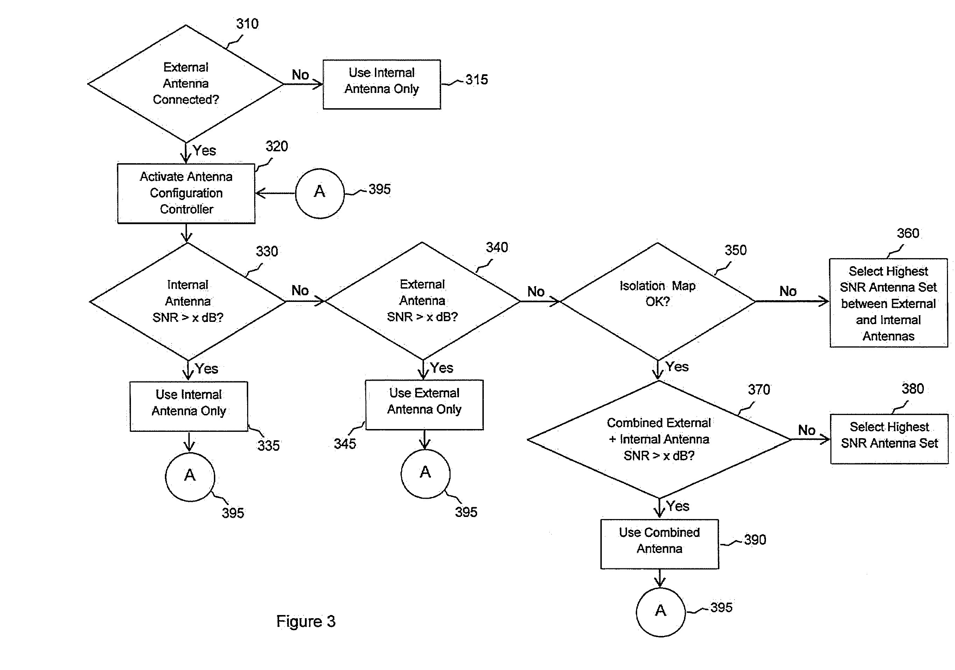

The flowchart in Figure 3 illustrates an embodiment of how such a selection process may occur. At box 310, a device determines if an external antenna array is connected. If an external antenna array is not connected, then at box 315, only the internal antenna is used. If an external antenna array is connected, then at box 320, the antenna configuration controller is activated. Next at box 330, it is determined if an internal antenna's SNR or some other appropriate signal quality parameter, for example transmitted or received power or signal strength, is greater than a pre-specified threshold. If an internal antenna's SNR or other appropriate parameter is greater than the threshold, then at box 335, only the internal antenna is used. If an internal antenna's SNR is not greater than the threshold, then at box 340, it is determined if an external antenna's SNR is greater than the pre-specified threshold. If an external antenna's SNR is greater than the threshold, then at box 345, only the external antenna is used.

If an external antenna's SNR is not greater than the threshold, then at box 350, it is determined if an appropriate isolation map exists for a combination of an internal antenna and an external antenna. If an appropriate isolation map does not exist, then at box 360, either an internal antenna or an external antenna is selected depending on which antenna set has the highest SNR. If an appropriate isolation map does exist, then at box 370, it is determined if the combined SNR for an external antenna and an internal antenna is greater than the pre-specified threshold. If the combined SNR is not greater than the threshold, then at box 380, either an internal antenna or an external antenna is selected depending on which antenna set has the highest SNR. If the combined SNR is greater than the threshold, then at box 390, a combination of one or more internal antennas and one or more external antennas is used.

In other words, if the observed received signal strength of the internal antennas is not adequate for optimal performance, or if some other suitable alternative parameter or combination of parameters characterizing the performance of the internal antennas is not adequate, the external antenna array's SNR or other suitable performance parameter is examined. If the external array does not provide the required SNR, the ACC computes the combined SNR using the best combination of both the external array and internal antennas. If the combined configuration SNR satisfies the condition, the ACC references the isolation map. If the isolation map is satisfactory for the selected internal-plus-external antenna configuration, the ACC selects both the antenna arrays and may act only to provide cooperation for the exchange of channel coefficients between the two antenna arrays. Optionally, the ACC may engage the Combined Antenna Processing Unit, which performs the processing for all the antennas. The Combined Antenna Processing Unit may incorporate the unequal channel coefficients and modulate the weights differently for the internal antenna array and for the external antenna array. In summary, the criterion used for antenna selection is to maximize SNR or a similar parameter for the given transmission. Further, antenna configurations are constructed based on isolation constraints for a given set of transmissions.

Periodically throughout a transmission, the ACC may be reinvoked to optimize the choice of antennas, as shown at step A 395 in Figure 3. That is, the steps in the ACC decision flowchart of Figure 3 may be periodically repeated to select the best antenna configuration as the transmission progresses. Periodic repetition may refer to a periodic time or to periodic time slots of the transmitted or received signal, for example every couple of slots. Thus, the transmission may alternate between internal, external, and combined antenna sets.

Returning to Figure 2, each radio access technology in the radio subsystem 220 may use a different antenna configuration. For example, the WiFi radio 221 may use only the external antenna array 250, as indicated by line 270. The VHTWiFi radio 222 may use both the internal antenna array 260 and the external antenna array 250, as indicated by lines 280. The GSM radio 225 may use only the internal antenna array 260, as indicated by line 290. In other embodiments, other antenna configurations could be used with the RATs in the radio subsystem 220. In an embodiment, a preferred antenna configuration for each RAT in the device may be stored in the ACC 210 and enabled when the RAT is activated.

In order to be able to work with the auxiliary antenna array unit, devices may need to be enhanced with a capability to detect the auxiliary array and, based on that detection, perform antenna selection and signal processing considering both internal and external antennas. A device may behave differently depending on whether or not the ACC has previously been downloaded to the device. If the ACC has not previously been downloaded, the following steps may be taken. Upon the first insertion of the auxiliary antenna array into a communications port on the device, the device may open a user interface that asks the user if the relevant software can be downloaded. If the user agrees to the download, the device may download and install an auxiliary antenna usage software application, for example the ACC. The auxiliary antenna software module may detect the antenna configuration on the device and the antenna configuration on the auxiliary antenna array. The device may then query the user regarding whether the auxiliary antenna array can be utilized (in addition to the internal antenna) by default or by manual choice. The device may then establish individual configurations of the internal and auxiliary antenna arrays and a combined configuration of the auxiliary and internal antenna arrays.

On subsequent use, when the auxiliary antenna array is detected at a communications port, the device may switch between the internal antenna array and the auxiliary antenna array based on adaptive criteria, which may include maximizing the SNR, minimizing antenna mutual coupling, maximizing total transmitted or received power, or some other appropriate parameter. The device may additionally or alternatively combine the internal antenna and auxiliary antenna signals based on adaptive criteria.

The detachable auxiliary antenna array is generic in that the array can be used on devices with any form factor and can be offered in various lengths, such as a smaller version for a smart phone and a larger version for a tablet. The array can be stored away and used only when additional gain is needed, such as for downloading large files. The external antenna array as described herein may be used when a device is utilized as an access point and is therefore being left in a stable position, as well as when the device is being transported. The array can be used for any of the radio access technologies employed in the device. The array can be used separately when the internal device antennas are inactivated or in cooperation with the antennas in the device. The array can be turned on or off adaptively based on defined criteria.

The external antenna array disclosed herein overcomes the limitations of external antennas that are integrated with a cable connected to a device in that such cables have difficulty maintaining a constant reference with respect to the device due to cable movement, thus impacting the channel characterization. That is, compared with external antennas connected by cable, the auxiliary antenna array is fixed to the device and the problems associated with cable loss are prevented, in addition to a constant channel being maintained in relation to device location and orientation. The auxiliary antenna array can be attached to any of the side edges of the device, providing another degree of freedom for obtaining optimal performance by minimizing isolation issues. The disclosed auxiliary antenna array can be used separately when the internal device antennas are inactivated or alternately in cooperation with the antennas in the device.

The external antenna array disclosed herein also overcomes the shortcomings of antennas that are not generic but instead are tailored to a single radio access technology. In addition, a device's internal antennas do not have to be disconnected in order for the external antenna array to be connected. Also, the external antenna array provides beam forming, MIMO, and diversity capabilities to increase system flexibility and provide better performance.

In summary, an auxiliary antenna array fixed to any suitable edge of a device is disclosed. The auxiliary antenna array may be supported by an antenna configuration controller software and a user interface module. The antenna array serves as an extension to the internal antennas in the device. The antenna configuration controller software with a built-in isolation map enables adaptive selection of a combination of internal and/or external antennas to maximize the performance of the device's radios. A user interface allows the default or manual selection of the use of the auxiliary antenna array.

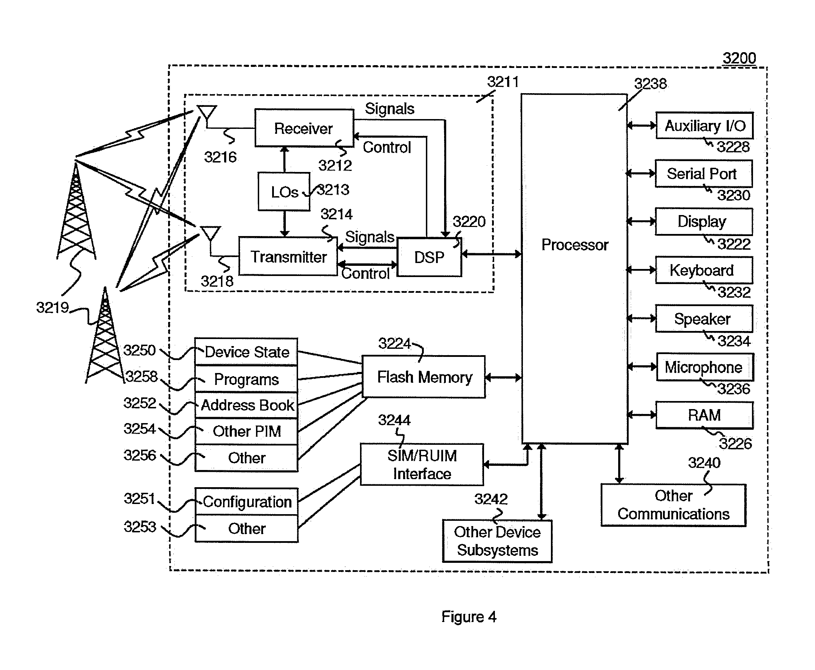

As mentioned above, the implementations described herein may be implemented by mobile telephones, personal digital assistants, handheld computers, laptop computers, tablet computers, or other types of devices. An example of such a device is described below with regard to Figure 4. Device 3200 may comprise a two-way wireless communication device having voice and data communication capabilities. In some embodiments, voice communication capabilities are optional. The device 3200 generally has the capability to communicate with other computer systems on the Internet. Depending on the exact functionality provided, the device may be referred to as a data messaging device, a two-way pager, a wireless e-mail device, a cellular telephone with data messaging capabilities, a wireless Internet appliance, a wireless device, a smart phone, a mobile device, or a data communication device, as examples.

Where the device 3200 is enabled for two-way communication, it may incorporate a communication subsystem 3211, including a receiver 3212 and a transmitter 3214, as well as associated components such as one or more antenna elements 3216 and 3218, local oscillators (LOs) 3213, and a processing module such as a digital signal processor (DSP) 3220. The particular design of the communication subsystem 3211 may be dependent upon the communication network in which the device 3200 is intended to operate.

Network access requirements may also vary depending upon the type of network 3219. In some networks, network access is associated with a subscriber or user of the device 3200. The device 3200 may require a removable user identity module (RUIM) or a subscriber identity module (SIM) card in order to operate on a network. The SIM/RUIM interface 3244 is typically similar to a card slot into which a SIM/RUIM card may be inserted. The SIM/RUIM card may have memory and may hold many key configurations 3251 and other information 3253, such as identification and subscriber-related information.

When required network registration or activation procedures have been completed, the device 3200 may send and receive communication signals over the network 3219. As illustrated, the network 3219 may consist of multiple base stations communicating with the device 3200.

Signals received by antenna 3216 through communication network 3219 are input to receiver 3212, which may perform such common receiver functions as signal amplification, frequency down conversion, filtering, channel selection, and the like. Analog to digital (A/D) conversion of a received signal allows more complex communication functions, such as demodulation and decoding to be performed in the DSP 3220. In a similar manner, signals to be transmitted are processed, including modulation and encoding for example, by DSP 3220 and are input to transmitter 3214 for digital to analog (D/A) conversion, frequency up conversion, filtering, amplification, and transmission over the communication network 3219 via antenna 3218. DSP 3220 not only processes communication signals but also provides for receiver and transmitter control. For example, the gains applied to communication signals in receiver 3212 and transmitter 3214 may be adaptively controlled through automatic gain control algorithms implemented in DSP 3220.

The device 3200 generally includes a processor 3238 which controls the overall operation of the device. Communication functions, including data and voice communications, are performed through communication subsystem 3211. Processor 3238 also interacts with further device subsystems such as the display 3222, flash memory 3224, random access memory (RAM) 3226, auxiliary input/output (I/O) subsystems 3228, serial port 3230, one or more keyboards or keypads 3232, speaker 3234, microphone 3236, other communication subsystem 3240 such as a short-range communications subsystem, and any other device subsystems generally designated as 3242. Serial port 3230 may include a USB port or other port currently known or developed in the future.

Some of the illustrated subsystems perform communication-related functions, whereas other subsystems may provide "resident" or on-device functions. Notably, some subsystems, such as keyboard 3232 and display 3222, for example, may be used for both communication-related functions, such as entering a text message for transmission over a communication network, and device-resident functions, such as a calculator or task list.

Operating system software used by the processor 3238 may be stored in a persistent store such as flash memory 3224, which may instead be a read-only memory (ROM) or similar storage element (not shown). The operating system, specific device applications, or parts thereof, may be temporarily loaded into a volatile memory such as RAM 3226. Received communication signals may also be stored in RAM 3226.

As shown, flash memory 3224 may be segregated into different areas for both computer programs 3258 and program data storage 3250, 3252, 3254 and 3256. These different storage types indicate that each program may allocate a portion of flash memory 3224 for their own data storage requirements. Processor 3238, in addition to its operating system functions, may enable execution of software applications on the device 3200. A predetermined set of applications that control basic operations, including at least data and voice communication applications for example, may typically be installed on the device 3200 during manufacturing. Other applications may be installed subsequently or dynamically.

Applications and software may be stored on any computer-readable storage medium. The computer-readable storage medium may be tangible or in a transitory/non-transitory medium such as optical (e.g., CD, DVD, etc.), magnetic (e.g., tape), or other memory currently known or developed in the future.

One software application may be a personal information manager (PIM) application having the ability to organize and manage data items relating to the user of the device such as, but not limited to, e-mail, calendar events, voice mails, appointments, and task items. One or more memory stores may be available on the device to facilitate storage of PIM data items. Such a PIM application may have the ability to send and receive data items via the wireless network 3219. Further applications may also be loaded onto the device 3200 through the network 3219, an auxiliary I/O subsystem 3228, serial port 3230, short-range communications subsystem 3240, or any other suitable subsystem 3242, and installed by a user in the RAM 3226 or a non-volatile store (not shown) for execution by the processor 3238. Such flexibility in application installation may increase the functionality of the device 3200 and may provide enhanced on-device functions, communication-related functions, or both. For example, secure communication applications may enable electronic commerce functions and other such financial transactions to be performed using the device 3200.

In a data communication mode, a received signal such as a text message or web page download may be processed by the communication subsystem 3211 and input to the processor 3238, which may further process the received signal for output to the display 3222, or alternatively to an auxiliary I/O device 3228.

A user of device 3200 may also compose data items, such as email messages for example, using the keyboard 3232, which may be a complete alphanumeric keyboard or telephone-type keypad, among others, in conjunction with the display 3222 and possibly an auxiliary I/O device 3228. Such composed items may then be transmitted over a communication network through the communication subsystem 3211.

For voice communications, overall operation of the device 3200 is similar, except that received signals may typically be output to a speaker 3234 and signals for transmission may be generated by a microphone 3236. Alternative voice or audio I/O subsystems, such as a voice message recording subsystem, may also be implemented on the device 3200. Although voice or audio signal output may be accomplished primarily through the speaker 3234, display 3222 may also be used to provide an indication of the identity of a calling party, the duration of a voice call, or other voice call-related information, for example.

Serial port 3230 may be implemented in a personal digital assistant (PDA)-type device for which synchronization with a user's desktop computer (not shown) may be desirable, but such a port is an optional device component. Such a port 3230 may enable a user to set preferences through an external device or software application and may extend the capabilities of the device 3200 by providing for information or software downloads to the device 3200 other than through a wireless communication network. The alternate download path may, for example, be used to load an encryption key onto the device 3200 through a direct and thus reliable and trusted connection to thereby enable secure device communication. Serial port 3230 may further be used to connect the device to a computer to act as a modem.

Other communications subsystems 3240, such as a short-range communications subsystem, are further optional components which may provide for communication between the device 3200 and different systems or devices, which need not necessarily be similar devices. For example, the subsystem 3240 may include an infrared device and associated circuits and components or a Bluetooth™ communication module to provide for communication with similarly enabled systems and devices. Subsystem 3240 may further include non-cellular communications such as WiFi, WiMAX, near field communication (NFC), and/or radio frequency identification (RFID). The other communications element 3240 may also be used to communicate with auxiliary devices such as tablet displays, keyboards or projectors.

In an implementation, a wireless communication device is provided. The device comprises a radio access subsystem disposed at least partially within a housing of the device. The device further comprises at least one internal antenna disposed within the housing of the device. The at least one internal antenna is communicatively coupled to the radio access subsystem. The device further comprises an external communication port disposed on the housing of the device. The external communication port is communicatively coupled to the radio access subsystem. The device further comprises a control component configured to determine whether an external antenna module is connected to the external communication port and to control the radio access subsystem to selectively use the internal antenna and the external antenna module. Selective use comprises using only the internal antenna, or using only the external antenna module, or using both the internal antenna and the external module simultaneously.

In another implementation, an antenna array is provided. The antenna array comprises a plurality of antennas configured on a frame that is externally attachable to a wireless communication device. The antenna array further comprises a processing unit configured to process antenna selection instructions received from a control component on the device, the control component configured to determine whether the device uses only an internal antenna in the device, uses only an external antenna, or uses a combination of the internal antenna and the external antenna.

In another implementation, a method for antenna configuration is provided. The method comprises determining, by a control component on a wireless communication device, whether the device uses only at least one internal antenna in the device, uses only at least one external antenna coupled to the device, or uses a combination of at least one internal antenna and at least one external antenna.

While several implementations have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein.

## Claims

1. A wireless communication device comprising:
a radio access subsystem disposed at least partially within a housing of the device;
at least one internal antenna disposed within the housing of the device, the internal antenna communicatively coupled to the radio access subsystem;
an external communication port disposed on the housing of the device, the external communication port communicatively coupled to the radio access subsystem; and
a control component configured to determine whether an external antenna module is connected to the external communication port and to control the radio access subsystem to selectively use the internal antenna and an external antenna module, wherein selective use comprises using only the internal antenna, or using only the external antenna module, or using both the internal antenna and the external module simultaneously.

2. The device of claim 1 wherein, when the control component uses both the internal antenna and the external module simultaneously, the control component further selects at least one of:
a channel diversity mode of operation;
a dual simplex mode of operation;
a multiple input multiple output (MIMO) mode of operation;
a beam forming mode of operation; and
a mode of operation promoting independent operation of different radio access technology (RAT) channels.

3. The device of claim 1 wherein, when the control component uses both the internal antenna and the external module simultaneously, the control component further selects at least two concurrent modes of operation from the list consisting of:
channel diversity, dual simplex, multiple input multiple output (MIMO), beam forming, and independent operation of different radio access technology (RAT) channels

4. The device of claim 1, wherein, when only the external antenna module is used, the control component provides an instruction to a processing unit on the external antenna module to select the external antenna module.

5. The device of claim 1, wherein, when the internal antenna and the external antenna module are used simultaneously, the combination of the internal antenna and the external antenna module acts as a virtual antenna array.

6. The device of claim 5, wherein the control component includes a combined antenna processing unit configured to adjust the characteristics of the virtual antenna array based on signal quality information received from at least one of:
a processing unit on the external antenna module;
a processing unit on the device; and
at least one radio transmitting and receiving component on the device.

7. The device of claim 5, wherein the control component pre-determines signal quality characteristics of the virtual antenna array for a plurality of configurations of internal antennas and external antennas and for a plurality of radio access technologies associated with the internal antennas and external antennas, and wherein the control component selects a first configuration when the pre-determined characteristics of the first configuration provide signal quality superior to the signal quality provided by a second configuration.

8. The device of claim 5, wherein the control component periodically evaluates signal quality characteristics of the virtual antenna array for a plurality of configurations of internal antennas and external antennas and for a plurality of radio access technologies associated with the internal antennas and external antennas, and wherein the control component selects a different configuration when the characteristics of the different configuration provide signal quality superior to the signal quality provided by a previously selected configuration.

9. The device of claim 1, wherein the device displays a notification regarding a location on the device where the external antenna module provides signal quality superior to the signal quality obtainable when the external antenna module is placed at another location on the device, the notification being based on signal quality information received from at least one of:
a processing unit on the external antenna module;
a processing unit on the device; and
at least one radio transmitting and receiving component on the device.

10. The device of claim 1, wherein the control component is activated when the device detects that the external antenna module is coupled to the device.

11. The device of claim 1, wherein a first external antenna on the external antenna module is configured for operation with a first radio access technology (RAT) operable on the device and a second external antenna on the external antenna module is configured for operation with a second RAT operable on the device.

12. The device of claim 11, wherein information regarding a preferred external antenna for each RAT on the device is stored, and wherein the preferred external antenna is enabled when the associated RAT is activated.

13. The device of claim 1, wherein the device includes a user interface configured to display at least one of:
a message asking if the control component may be downloaded to the device; and
a message asking whether the external antenna module may be used and, if so, whether the use is to be by default or by manual choice.

14. An antenna array comprising:
a plurality of antennas configured on a frame that is externally attachable to a wireless communication device; and
a processing unit configured to process antenna selection instructions received from a control component on the device, the control component configured to determine whether the device only uses an internal antenna in the device, or uses only an external antenna, or uses a combination of the internal antenna and the external antenna.

15. The antenna array of claim 14, wherein the processing unit dynamically adjusts at least one of gain and directivity of the antenna array based on signal quality information.

16. A method for antenna configuration, the method comprising:
determining, by a control component on a wireless communication device, whether the device only uses at least one internal antenna in the device, only uses at least one external antenna coupled to the device, or uses a combination of at least one internal antenna and at least one external antenna.

17. The device of claim 1, the antenna array of claim 14, or the method of claim 16, wherein only the internal antenna is used when at least one signal quality parameter associated with the internal antenna exceeds a threshold, wherein only the external antenna module is used when no signal quality parameter associated with the internal antenna exceeds the threshold but at least one signal quality parameter associated with the external antenna module does exceed the threshold, and wherein the internal antenna and the external antenna module are used simultaneously when neither a signal quality parameter associated with the internal antenna nor a signal quality parameter associated with the external antenna module exceeds the threshold but a combined signal quality parameter associated with both the internal antenna and the external antenna module does exceed the threshold.
